(19) Europäisches Patentamt
European Patent Office
Office européen des brevets

(11) **EP 3 404 466 B1**

(12) **EUROPEAN PATENT SPECIFICATION**

(45) Date of publication and mention
of the grant of the patent:
**03.11.2021 Bulletin 2021/44**

(51) Int Cl.:
***G02B 27/01*** *(2006.01)*     ***B60K 35/00*** *(2006.01)*
***G02F 1/1335*** *(2006.01)*

(21) Application number: **16884903.2**

(22) Date of filing: **13.01.2016**

(86) International application number:
**PCT/JP2016/050880**

(87) International publication number:
**WO 2017/122300 (20.07.2017 Gazette 2017/29)**

(54) **HEAD-UP DISPLAY APPARATUS**

HEAD-UP-ANZEIGEVORRICHTUNG

APPAREIL D'AFFICHAGE TÊTE HAUTE

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(43) Date of publication of application:
**21.11.2018 Bulletin 2018/47**

(73) Proprietor: **Toppan Printing Co., Ltd.
Taito-ku
Tokyo (JP)**

(72) Inventors:
 • **YOSHIDA, Testushi
  Hino-shi
  Tokyo 191-0065 (JP)**
 • **KUSUNO, Tetsuya
  Hino-shi
  Tokyo 191-0065 (JP)**
 • **NAKAMURA, Yayoi
  Hino-shi
  Tokyo 191-0065 (JP)**
 • **OOSAWA, Kazuhiko
  Hino-shi
  Tokyo 191-0065 (JP)**
 • **YAMAGUCHI, Minoru
  Hino-shi
  Tokyo 191-0065 (JP)**

(74) Representative: **Nederlandsch Octrooibureau
P.O. Box 29720
2502 LS The Hague (NL)**

(56) References cited:
**EP-A1- 2 849 175        EP-A2- 2 216 769
DE-A1-102005 032 868     DE-A1-102008 048 778
DE-A1-102008 048 778     GB-A- 2 226 421
JP-A- H04 325 323        JP-A- H10 221 691
JP-A- 2008 164 960       JP-A- 2008 195 123
JP-A- 2014 136 520       JP-A- 2014 174 416
US-A1- 2011 102 483**

**EP 3 404 466 B1**

**Description**

FIELD

The present invention relates to a head-up display device, and particularly to a head-up display device using a liquid crystal display device.

BACKGROUND

A head-up display (HUD) is known which displays a virtual image by projecting display light from a liquid crystal display device onto a display member, such as a windshield of a vehicle. This head-up display reflects display light, which is illumination light emitted from a backlight and having passed through the liquid crystal display device, with a reflecting mirror (or a concave mirror), and projects the reflected light onto a display member such as a windshield or a combiner to enable a driver to visually recognize a virtual image displayed on the display member. Accordingly, the driver can read information with almost no shifting of the field of view from the driving state.

When the head-up display is used in a dark location, a difference is caused between a black brightness of a display area by the head-up display and a black brightness of the background around the display area. At this time, the border between the display area and the background is inevitably recognized by a viewer due to the brightness difference.

The dynamic range of the human eye is approximately 80 decibels, for example. To prevent the border from being visually recognized in a completely dark location, a contrast ratio of 10000:1 or more is required. In general, the contrast ratio of a liquid crystal display device is approximately 100:1 to 2000:1; therefore, it is difficult to eliminate the border in a completely dark location.

CITATION LIST

PATENT LITERATURE

Patent Literature 1: Jpn. Pat. Appln. KOKAI Publication No. H10-221691 Patent Literature 2 : DE 10 2008 048778 A1.

SUMMARY

TECHNICAL PROBLEM

The present invention provides a head-up display device capable of preventing a border caused by the difference between a black brightness of a display area and a black brightness of a background.

SOLUTION TO PROBLEM

According to an aspect of the present invention, there is provided a head-up display device according to claims 1 and 7. Further aspects of the invention are defined by the dependent claims.

ADVANTAGEOUS EFFECTS OF INVENTION

The present invention can provide a head-up display device capable of preventing a border caused by the difference between a black brightness of a display area and a black brightness of a background.

BRIEF DESCRIPTION OF THE DRAWINGS

FIG. 1 illustrates a border between a display area and a background of a head-up display device.
FIG. 2 is a graph showing the relationship between the environmental illuminance and the black brightness of each of the display area and the background.
FIG. 3 is a graph showing the brightness ratio and brightness difference between the display area and the background.
FIG. 4 is a graph in which the environmental illuminance of FIG. 3 is expressed by a common logarithm.
FIG. 5 is a graph showing the relationship between the brightness of the backlight and the environmental illuminance.
FIG. 6 is a cross-sectional view schematically showing the head-up display device according to the first embodiment.

FIG. 7 is a block diagram of the head-up display device.

FIG. 8 is a cross-sectional view of a liquid crystal display device.

FIG. 9 illustrates the relationship between the environmental illuminance and the upper limit of backlight brightness.

FIG. 10 is plane views of the display area of the head-up display device according to the second embodiment.

FIG. 11 is a graph showing the distinctive brightness difference at the border between the black brightness of the display area and the black brightness of the background according to the second embodiment.

FIG. 12 is a diagram showing examples of information displayed by the head-up display device 10.

FIG. 13 is a plane view of the display area on the screen of the head-up display device according to the third embodiment.

FIG. 14 is a plane view of the display area of the head-up display device and the background recognized on the display member.

FIG. 15 is a graph showing the transmittance of the gradation area.

FIG. 16 is a graph showing the distinctive brightness difference at the border between the black brightness of the display area and the black brightness of the background according to the third embodiment.

FIG. 17 is a diagram illustrating a method for forming the gradation area by using a film.

FIG. 18 is a diagram illustrating a method for forming the gradation area by using a black matrix.

FIG. 19 is a plane view of the display area of the head-up display device according to the fourth embodiment.

FIG. 20 is a plane view of the display area of the head-up display device and the background recognized on the display member.

FIG. 21 is a graph showing the distinctive brightness difference between the black brightness of the display area and the black brightness of the background according to the fourth embodiment.

## DETAILED DESCRIPTION

A description will now be given of the embodiments with reference to the accompanying drawings. It should be noted that the drawings are schematic or conceptual, and the dimensions and scales of the drawings are not necessarily the same as the actual products. Where the same portion is depicted in different drawings, the dimensions and scale of one drawing may be different from those of another. Several embodiments described below merely show exemplary apparatuses and methods that implement the technical ideas of the present invention. The technical ideas are not limited by the element shapes, structures, arrangements etc. described below. In the description below, structural elements having substantially the same functions and configurations will be denoted by the same reference symbols, and a repetitive description of such elements will be given only where necessary.

[First Embodiment]

[1] Principle

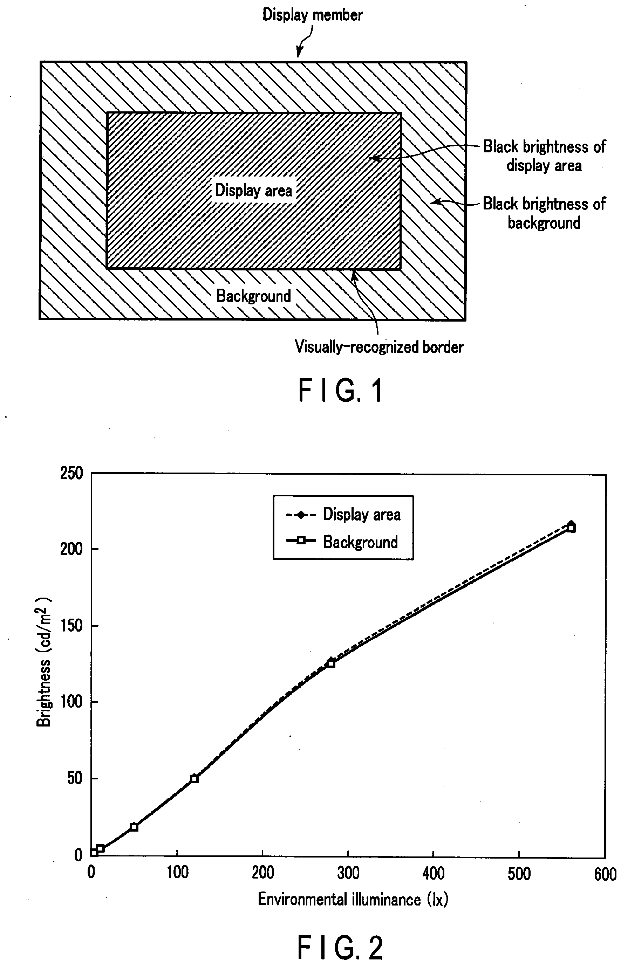

In a head-up display device, display light emitted from a liquid crystal display device is projected onto a display member, such as a windshield of a vehicle, or a combiner. A viewer views a virtual image obtained by reflection of the display light from the display member by superimposing the virtual image on the background. Therefore, a high-quality image is enhanced by making the text and graphics displayed by the head-up display device stand out from the background. When the head-up display device is used in a dark location (location of a low environmental illuminance), such as at night, i.e., in a dark background condition, information displayed on the display member is made to stand out from the background by adjusting the black brightness of the display area to match the black brightness of the background. However, there is a problem that a difference is caused between the black brightness of the background and the black brightness of the display area as shown in FIG. 1, and the border is visually recognized by a viewer. If a viewer visually recognizes the border between the background and the display area of the head-up display device, the high-quality image of the display of the head-up display device is degraded.

Inventors carried out an experiment to find a condition for preventing viewers from visually recognizing the border between the black brightness of the background and the black brightness of the display area. FIG. 2 is a graph showing the relationship between the environmental illuminance and the black brightness of each of the display area and the background. The graph of FIG. 2 includes a plot of the black brightness of the background and a plot of the black brightness of the display area of the head-up display device. The horizontal axis of FIG. 2 indicates the environmental illuminance (lux: lx), and the vertical axis of FIG. 2 indicates the black brightness ($cd/m^2$).

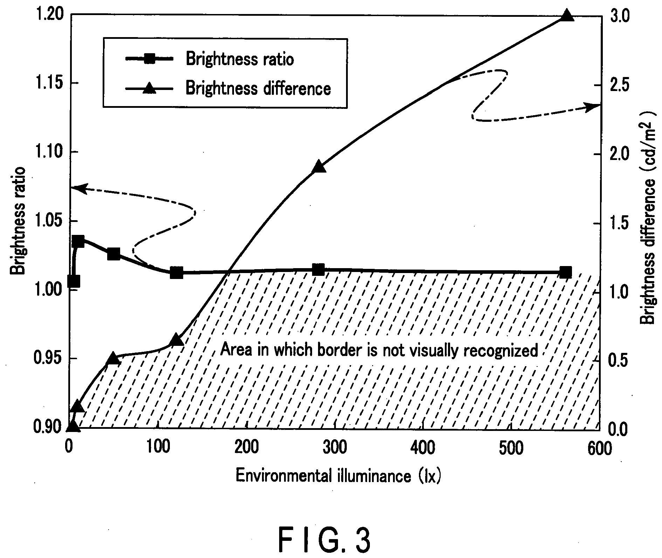

FIG. 3 is a graph showing the brightness ratio and brightness difference between the display area and the background. The horizontal axis of FIG. 3 indicates the environmental illuminance (lx), and the vertical axis of FIG. 3 indicates the brightness ratio and brightness difference ($cd/m^2$). The graph of FIG. 3 is calculated based on the graph of FIG. 2. Where the brightness of the background is $L_0$, and the brightness of the display area of the head-up display

device is $L_1$, the brightness ratio is expressed as $L_1/L_0$, and the brightness difference is expressed as "$L_1-L_0$". The brightness of the display area satisfies $L_1>0$.

As shown in FIG. 3, an inflection point is found around the environmental illuminance of 100 lx, and the brightness ratio that allows the border to be visually recognized is maintained approximately constant when the environmental illuminance is 100 lx or more. It can be seen that the border is not visually recognized when the brightness ratio of the display area to the background is within a range from 1.012 to 1.016.

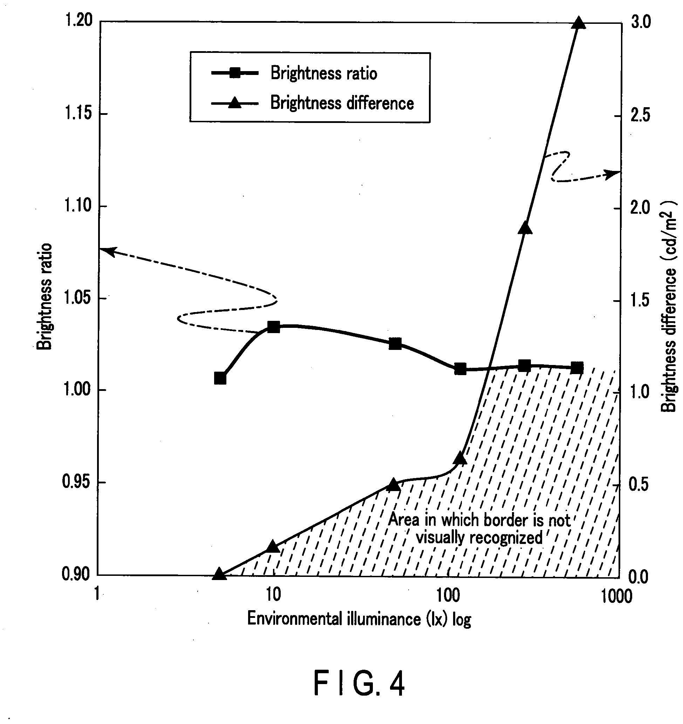

When the environmental illuminance is less than 100 lx, the brightness difference that allows the border to be visually recognized varies depending on the environmental illuminance. FIG. 4 is a graph in which the environmental illuminance of FIG. 3 is expressed by a common logarithm. FIG. 4 shows that, when the environmental illuminance is less than 100 lx, the brightness difference that allows the border to be visually recognized and the common logarithm of environmental illuminance have a linear function relationship.

The visibility of the border between the background and the display area depends on the environmental illuminance; therefore, to prevent the border from being visually recognized, the brightness (BL brightness) of the backlight, which is a light source of the liquid crystal display device, needs to be made lower than a specific value in accordance with the environmental illuminance.

Hereinafter, a method for controlling the BL brightness in dark locations and in bright locations by using a specific environmental illuminance as a border for distinguishing dark locations from bright locations will be described. In the present embodiment, the specific environmental illuminance for distinguishing dark locations from bright locations in the condition for using the head-up display device is determined as 100 lx based on the experimental result of FIG. 3. The specific environmental illuminance for distinguishing dark locations from bright locations varies depending on, for example, the sensitivity of a subject's eyes, the configuration, and optical system of the head-up display device.

[1-1] BL Brightness in Dark Locations (less than 100 lx)

In light of the above discussion, the BL brightness condition in dark locations (less than 100 lx) will be described. In dark locations, the difference between the black brightness of the background and the black brightness of the display area can be reduced by lowering the BL brightness.

According to FIGS. 3 and 4, with an environmental illuminance of approximately less than 100 lx, the border is not visually recognized when the difference between the black brightness of the background and the black brightness of the display area satisfies the following expression (1), where "log" is a base 10 common logarithm:

$$L_1-L_0 \leq 0.5 \cdot \log I - 0.4 \quad ...(1)$$

$L_0$: Black brightness of background (cd/m$^2$)
$L_1$: Black brightness of display area (cd/m$^2$)
I: Environmental illuminance (lx)

The brightness difference "$L_1-L_0$" is expressed by the following expression (2), where the screen is a display member (such as a windshield of a vehicle or a combiner) onto which display light emitted from a liquid crystal display device is projected, and the panel is a liquid crystal display device:

$$L_1-L_0 = (\text{BL brightness}) \cdot (\text{panel transmittance when displaying black}) \cdot (\text{screen reflectivity}) \quad ...(2)$$

The panel transmittance when displaying black, and the screen reflectivity vary depending on the configuration of the head-up display device. As one example, when the panel transmittance when displaying black is 0.006%, and the screen reflectivity is 30%, the BL brightness that satisfies the condition for preventing the border from being visually recognized is expressed by the following expression (3):

$$\text{BL brightness} \leq (0.5 \cdot \log I - 0.4)/(0.00006 \cdot 0.3) \leq 56000(0.5 \cdot \log I - 0.4) \quad ...(3)$$

For example, when the environmental illuminance I is 100 lx, the BL brightness is 33,000 cd/m$^2$ or less, and when the environmental illuminance I is 10 lx, the BL brightness is 5,600 cd/m$^2$ or less.

[1-2] BL Brightness in Bright Locations (100 lx or more)

Next, the BL brightness condition in bright locations will be described. According to FIGS. 3 and 4, with an environmental illuminance of approximately 100 lx or more, the border is not visually recognized when the brightness ratio satisfies $L_1/L_0 \leq 1.012$.

The brightness ratio $L_1/L_0$ can be transformed as the following expression (4):

$$L_1/L_0 = 1 + (L_1 - L_0)/L_0 \quad \ldots (4)$$

In the present experimental condition, the brightness ratio $L_1/L_0$ and the environmental illuminance I(lx) have the relationship "$L_0 = 0.4I$." From expressions (2) and (4), the BL brightness that satisfies the condition for preventing the border from being visually recognized is expressed as the following expression (5):

$$\text{BL brightness} \leq (1.012-1) \cdot 0.4I/(0.00006 \cdot 0.3) \leq 270I \quad \ldots (5)$$

For example, when the environmental illuminance I is 1000 lx, the BL brightness is 270,000 cd/m$^2$ or less, and when the environmental illuminance I is 10000 lx, the BL brightness is 2700,000 cd/m$^2$ or less.

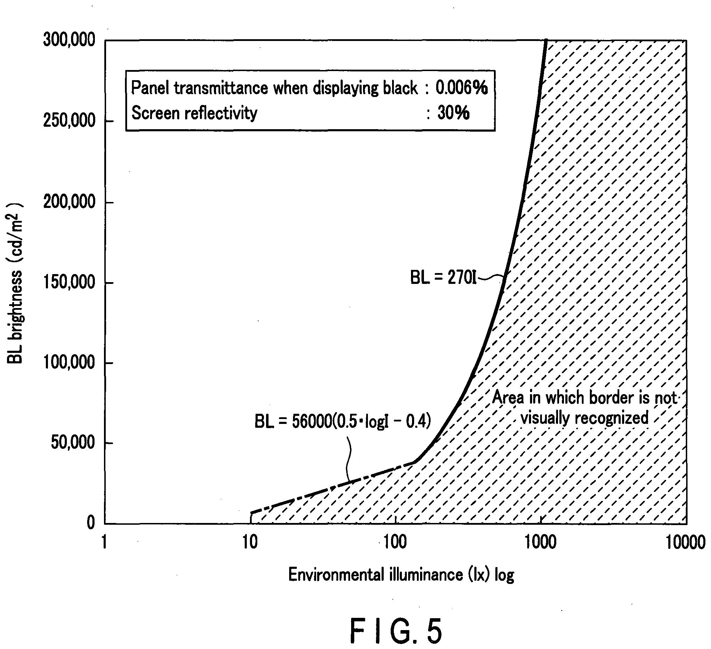

FIG. 5 is a graph showing the relationship between the BL brightness and the environmental illuminance. The horizontal axis of FIG. 5 indicates the common logarithm of environmental illuminance (lx), and the vertical axis of FIG. 5 indicates the backlight brightness (cd/m$^2$). By controlling the backlight brightness of the liquid crystal display device to be equal to or less than the numerical value shown in the graph of FIG. 5 in accordance with the environmental illuminance, the border between the black brightness of the background and the black brightness of the display area can be prevented from being visually recognized by a viewer.

The illuminance at the border between dark locations and bright locations (100 lx in the present embodiment) and the numerical values about brightness shown in FIGS. 2 to 5 vary depending on, for example, the sensitivity of a viewer's eyes, the brightness resolution ability of the viewer, the configuration and characteristics of the optical system, the reflectivity of the display member, and the size of the display area on the display member. Therefore, it is desirable to perform statistical analysis on results of experiments by as many subjects as possible, and calculate an average numerical value.

[2] Configuration of Head-up Display Device

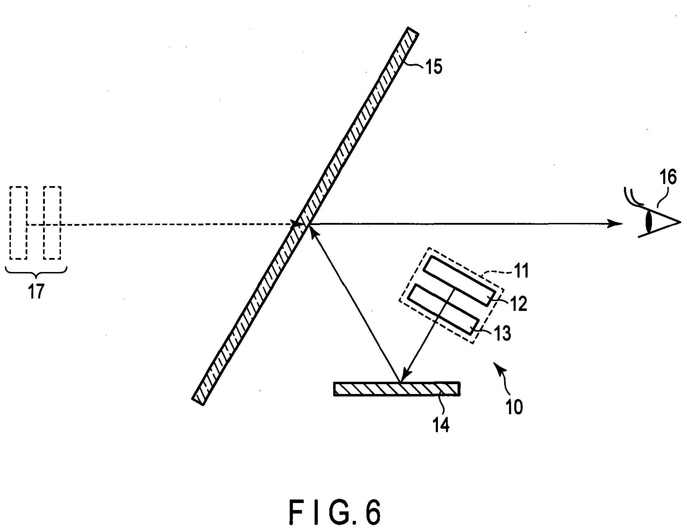

Next, a configuration of the head-up display device will be described. FIG. 6 is a cross-sectional view schematically showing a head-up display device 10 according to the first embodiment of the present invention. The head-up display device 10 comprises a display unit 11, a reflective member (reflecting mirror) 14, and a display member 15. The display unit 11 comprises a light source section (backlight) 12 and a liquid crystal display device 13.

The backlight 12 is formed by, for example, a planer light source (surface light source), and supplies illumination light to the liquid crystal display device 13. As a light-emitting element included in the backlight 12, for example, a white light emitting diode (LED) is used. Namely, the backlight 12 emits white light. The liquid crystal display device 13 allows illumination light from the backlight 12 to pass therethrough and performs light modulation on the illumination light. Then, the liquid crystal display device 13 displays an image showing driving information, such as a vehicle speed.

The reflecting mirror 14 is formed by a plane mirror, a concave mirror, or the like. The reflecting mirror 14 reflects display light from the liquid crystal display device 13 to the display member 15. When a concave mirror is used as the reflecting mirror 14, the concave mirror expands the display light from the liquid crystal display device 13 at a predetermined expansion rate.

The display member 15 is used for projection of the display light emitted from the liquid crystal display device 13, and displays the display light as a virtual image (display image) 17 by reflecting the display light to the driver. The display member 15 is, for example, a windshield of a vehicle. The display member 15 may also be a translucent screen (combiner) dedicated to the head-up display device 10. The combiner is used by being placed on a dashboard of a vehicle, being mounted on a rearview mirror placed in front of a viewer (driver) 16, or being mounted on a sun visor provided on an upper part of the windshield. The combiner comprises a base member, which is made of, for example, synthetic resin, in a plate shape having a curved surface. An evaporated film made of titanium oxide, silicon oxide, etc. is applied to the surface of the base member, and the evaporated film provides the combiner with a semi-transmissive function.

As indicated by the arrow in FIG. 6, illumination light emitted by the backlight 12 passes through the liquid crystal display device 13 and is subjected to light modulation. The display light that has passed through the liquid crystal display device 13 is reflected by the reflecting mirror 14, and is projected onto the display member 15. The virtual image 17 obtained by the projection of the display light onto the display member 15 is visually recognized by a viewer 16. In this way, the viewer 16 can view the virtual image 17 displayed in front of the driver's seat by superimposing it on the background.

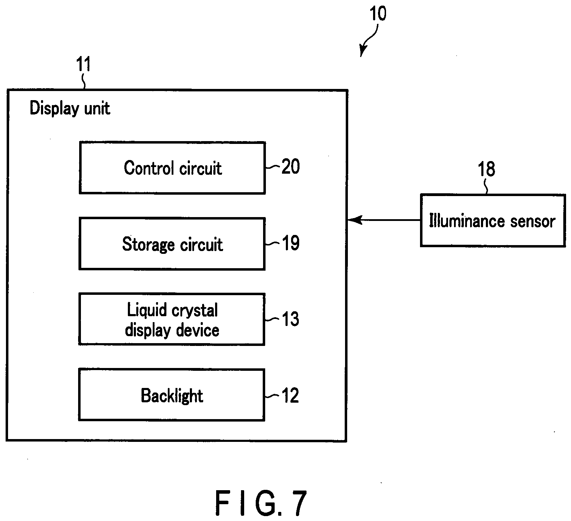

FIG. 7 is a block diagram of the head-up display device 10. The head-up display device 10 further comprises an illuminance sensor 18. The illuminance sensor 18 is attached in the vicinity of the display member 15, and measures the environmental illuminance of the vicinity of the display member 15. The environmental illuminance measured by the illuminance sensor 18 is sent to the display unit 11.

The display unit 11 further comprises a storage circuit 19 and a control circuit 20. The storage circuit 19 is formed by, for example, a nonvolatile memory. The storage circuit 19 stores various data necessary for the operation of the head-up display device 10. The storage circuit 19 also stores various data necessary for controlling the brightness of the backlight 12.

The control circuit 20 receives measured data of the environmental illuminance from the illuminance sensor 18, and controls the brightness of the backlight 12 based on the measured data and data in the storage circuit 19. The control circuit 20 also externally receives image data, and drives the liquid crystal display device 13 based on the image data.

(Configuration of Liquid Crystal Display Device 13)

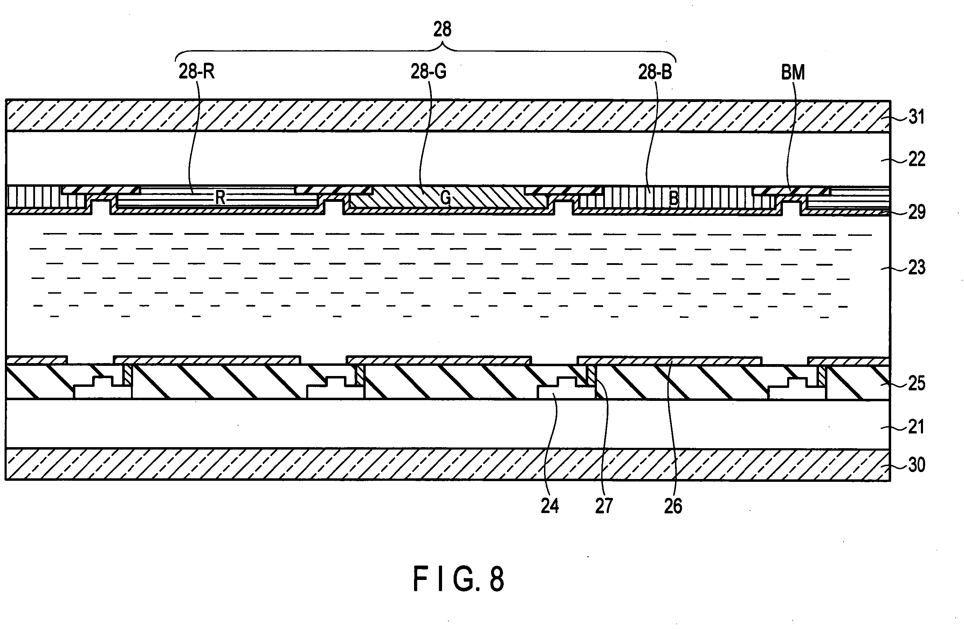

Next, an example, of the configuration of the liquid crystal display device 13 will be described. FIG. 8 is a cross-sectional view of the liquid crystal display device 13.

The liquid crystal display device 13 comprises: a TFT substrate 21, on which a switching transistor, a pixel electrode, etc. are formed; a color filter substrate (CF substrate) 22, on which a color filter and a common electrode are formed, and which is opposed to the TFT substrate 21; and a liquid crystal layer 23 interposed between the TFT substrate 21 and the CF substrate 22. The TFT substrate 21 and the CF substrate 22 are each formed by a transparent substrate (such as a glass substrate). The CF substrate 22 is opposed to the backlight 12, and illumination light from the backlight 12 enters the liquid crystal display device 13 from the CF substrate 22 side. The surface of the TFT substrate 21 opposite to the backlight 12 is the display surface of the liquid crystal display device 13.

The liquid crystal layer 23 is formed by a liquid crystal material sealed by a sealing member (not shown) that bonds the TFT substrate 21 and the CF substrate 22 together. The optical characteristics of the liquid crystal material are changed as the orientation of liquid crystal molecules is manipulated in accordance with the electric field applied between the TFT substrate 21 and the CF substrate 22. As a liquid crystal mode, for example, a vertical alignment (VA) mode is used; however, another liquid crystal mode, such as a twisted nematic (TN) mode or a homogeneous mode, may be used.

A plurality of switching transistors 24 are provided on the TFT substrate 21 on the liquid crystal layer 23 side. As the switching transistor 24, for example, a thin film transistor (TFT) is used. The switching transistor 24 comprises a gate electrode electrically connected to a scan line (not shown), a gate insulating film provided on the gate electrode, a semiconductor layer (such as an amorphous silicon layer) provided on the gate insulating film, and a source electrode and drain electrode provided apart from each other on the semiconductor layer. The source electrode is electrically connected to a signal line (not shown).

An insulating layer 25 is provided on the switching transistors 24. A plurality of pixel electrodes 26 are provided on the insulating layer 25. A contact plug 27 electrically connected to the pixel electrode 26 is provided in the insulating layer 25 on the drain electrode of the switching transistor 24.

A color filter 28 is provided on the CF substrate 22 on the liquid crystal layer 23 side. The color filter 28 comprises a plurality of colored filters (colored members), and specifically comprises a plurality of red filters 28-R, a plurality of green filters 28-G, and a plurality of blue filters 28-B. Common color filters are formed by red (R), green (G), and blue (B), which are light's three primary colors. A set of three adjacent colors R, G, and B forms a display unit (called pixel), and the single color portion of each of R, G, and B in one pixel is the minimum drive unit which is called subpixel. The switching transistor 24 and the pixel electrode 26 are provided for each subpixel.

A black matrix (light shielding film) BM for shielding light is provided at the separations between the red filter 28-R, green filter 28-G, and blue filter 28-B, and those between pixels (subpixels). Namely, the black matrix BM is formed like a net. The black matrix BM is provided to, for example, shield unnecessary light between colored members to improve contrast.

A common electrode 29 is provided on the color filter 28 and the black matrix BM. The common electrode 29 is formed in a flat shape on the entire display area of the liquid crystal display device 13.

Circular polarizers 30 and 31 are provided to interpose therebetween the TFT substrate 21 and the CF substrate 22. The circular polarizers 30 and 31 are each formed by a linear polarizer and a quarter-wave plate.

The pixel electrode 26, contact plug 27, and common electrode 29 are formed by a transparent electrode, and are made of, for example, indium tin oxide (ITO). The insulating layer 25 is made of a transparent insulating material, such as silicon nitride (SiN).

[3] Operation

Next, an operation of the head-up display device 10 configured as described above will be described. The liquid crystal display device 13 projects an image such as driving information onto the display member 15. The viewer 16 views the display area displayed on the display member 15 by the liquid crystal display device 13 by superimposing it on the background visually recognized via the display member 15. In addition, when the head-up display device 10 is used in a dark location, the liquid crystal display device 13 displays the area other than the driving information displayed with a brightness other than black with the same black as the dark location.

Moreover, in the present embodiment, the head-up display device 10 controls the brightness of the backlight 12 to prevent the border (see FIG. 1) between the black brightness of the background and the black brightness of the display area from being visually recognized by the viewer. Specifically, the control circuit 20 controls the brightness of the backlight 12 based on the measured data of the environmental illuminance sent from the illuminance sensor 18.

As shown in FIGS. 3 to 5, with a specific environmental illuminance (100 lx in the present embodiment) for distinguishing dark locations from bright locations used as a reference, when the environmental illuminance is less than 100 lx (dark location), the control circuit 20 changes the brightness of the backlight 12 in accordance with the difference between the black brightness of the display area and the black brightness of the background. Namely, the control circuit 20 controls the brightness of the backlight 12 to make the difference between the black brightness of the display area and the black brightness of the background equal to or less than a function uniformly increasing as the environmental illuminance measured by the illuminance sensor 18 increases. At this time, the difference between the black brightness of the display area and the black brightness of the background is a linear function of a common logarithm of an environmental illuminance.

In contrast, when the environmental illuminance is 100 lx or more (bright location), the control circuit 20 changes the brightness of the backlight 12 in accordance with the ratio of the black brightness of the display area to the black brightness of the background. Namely, the control circuit 20 controls the brightness of the backlight 12 to make the ratio of the black brightness of the display area to the black brightness of the background equal to or less than a certain value.

Hereinafter, the control operation of the brightness of the backlight 12 will be described by using expressions. In the case where the environmental illuminance is less than 100 lx (dark location), the border is not visually recognized when the difference between the black brightness of the background and the black brightness of the display area satisfies the following expression (6):

$$L_1 - L_0 \leq d_1 \cdot \log I + d_2 \quad \ldots (6)$$

In the case where the environmental illuminance is 100 lx or more (bright location), the border is not visually recognized when the difference between the black brightness of the background and the black brightness of the display area satisfies the following expression (7):

$$L_1 / L_0 \leq d_3 \quad \ldots (7)$$

$L_0$: Black brightness of background (cd/m$^2$)
$L_1$: Black brightness of display area (cd/m$^2$)
I: Environmental illuminance (lx)
$d_1$, $d_2$, and $d_3$: Constants

If expressions (6) and (7) are transformed into conditions of the brightness of the backlight (BL brightness), the following expressions (8) and (9) are obtained:

$$BL\ brightness \leq C_1 \cdot \log I + C_2 \quad \ldots (8)$$

$$BL\ brightness \leq C_3 \cdot I \quad \ldots (9)$$

$C_1$, $C_2$, and $C_3$: Constants

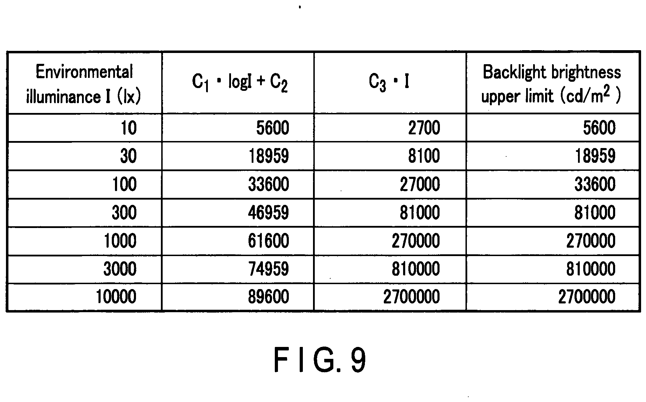

In the present embodiment, the environmental illuminance is measured by a illuminance sensor arranged at the position of the viewer to face the screen, an optical system which includes a liquid crystal display device having a transmittance of 0.006% when displaying black and which makes efficient use of 30% of the display light emitted by the liquid crystal display device (reflectivity of the display member is 30%) is used, and the values of the constants are $C_1$=28000, $C_2$=-22400, and $C_3$=270. FIG. 9 illustrates the relationship between the environmental illuminance I(lx) and the upper limit of backlight brightness.

When the illuminance measurement environment, the transmittance of the liquid crystal display device when displaying black, and the light utilization efficiency of the optical system, etc. are different, the constants take different values from the above-described ones. By controlling the backlight brightness in accordance with the above-described method, the border caused by the difference between the black brightness of the background and the black brightness of the display area can be made equal to or less than the distinctive threshold, and can be prevented from being visually recognized by the viewer.

[4] Advantage

In the first embodiment, as described above in detail, the head-up display device 10 (specifically, the control circuit 20) controls the brightness of the backlight 12 to prevent the border, caused by the difference between the black brightness of the display area displayed on the display member 15 by the liquid crystal display device 13 and the black brightness of the background around the display area, from being visually recognized. Namely, when the measurement result measured by the illuminance sensor 18 is less than a specific environmental illuminance for distinguishing dark locations from bright locations, the control circuit 20 controls the brightness of the backlight 12 to make the difference between the black brightness of the display area and the black brightness of the background equal to or less than a function uniformly increasing as the measurement result increases. When the measurement result is equal to or greater than the specific environmental illuminance, the control-circuit 20 controls the brightness of the backlight 12 to make the ratio of the black brightness of the display area to the black brightness of the background equal to or less than a certain value.

Accordingly, the first embodiment can realize a head-up display device 10 capable of preventing the border caused by the difference between the black brightness of the display area and the black brightness of the background from being visually recognized even when the environmental illuminance changes. Consequently, information display with an increasingly high-quality image can be performed.

[Second Embodiment]

The brightness range recognized by human beings can be expanded by recognizing the display of a partial area of the display area displaying black as ambient light of the border between the display area and the background. As a result, the resolution of the brightness that can be recognized by human beings can be lowered. In the second embodiment, a window having a tone other than black is displayed in the display area of the head-up display device 10. The visual effect of this window increases the distinctive threshold of the border between the black brightness of the display area and the black brightness of the background to make the border difficult to be visually recognized.

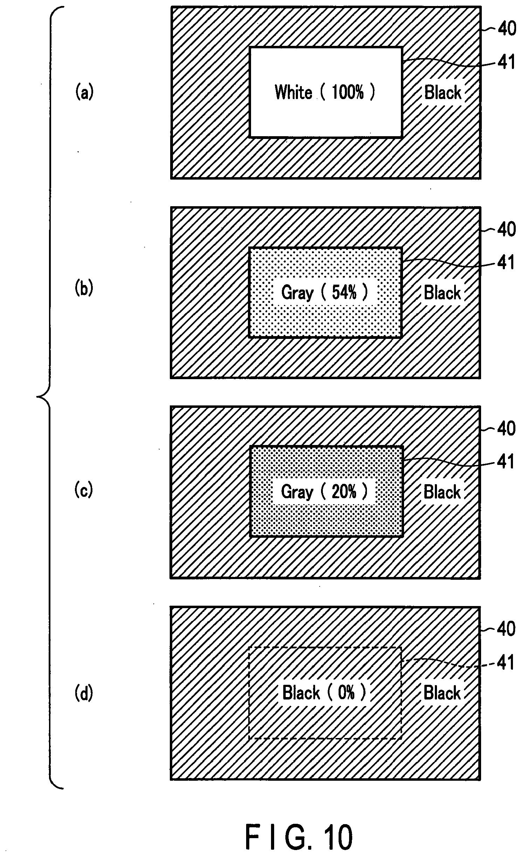

FIG. 10 is plane views of the display area 40 of the head-up display device 10 according to the second embodiment of the present invention. The display area 40 of FIG. 10 is a display projected onto the display member 15. The numerical values in FIG. 10 are a tone expressed as a percent; white is expressed as 100%, and black is expressed as 0%.

A window 41 having, for example, an area of 25% is provided in the display area 40 of the head-up display device 10. While the display area 40 displays black, the tone of the window 41 is changed from 100% (white) to 0% (black). As an example, FIG. 10(a) shows a 100% tone, FIG. 10(b) shows a 54% tone, FIG. 10(c) shows a 20% tone, and FIG. 10(d) shows a 0% tone. According to this experiment, as the tone (brightness) of the window 41 is increased, the distinctive threshold of the border between the black brightness of the background and the black brightness of the display area of the head-up display device 10 can be increased.

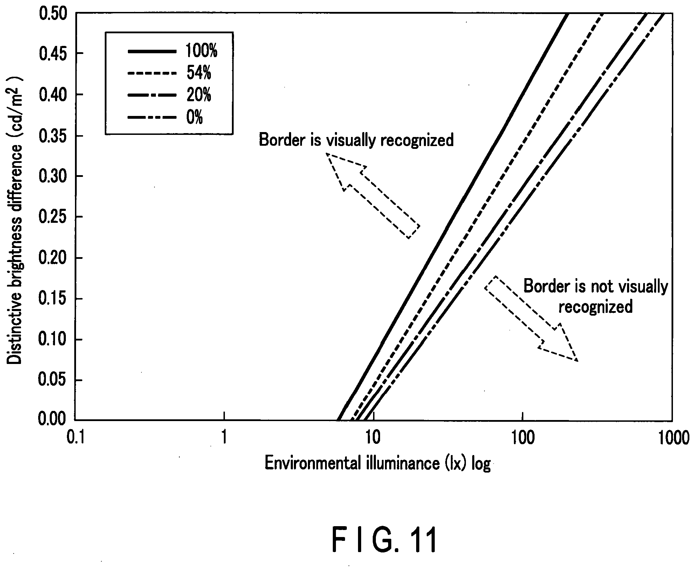

FIG. 11 is a graph showing the distinctive brightness difference at the border between the black brightness of the display area 40 and the black brightness of the background according to the second embodiment. The distinctive brightness difference is a brightness difference which enables the viewer to identify the black brightness of the display area 40 and the black brightness of the background. The horizontal axis of FIG. 11 indicates the common logarithms of environmental illuminance (lx), and the vertical axis of FIG. 11 indicates the distinctive brightness difference ($cd/m^2$). FIG. 11 includes plots corresponding to four tones of the window 41: 100% (while), 54% (gray), 20% (gray), and 0% (black).

The approximate expression between the environmental illuminance I and the distinctive brightness difference D of each tone in the environmental illuminance range from approximately 10 lx to 50 lx is as follows:

Window (100%): D=0.325logI-0.248
Window (54%): D=0.297logI-0.252
Window (20%): D=0.257logI-0.226
Window (0%): D=0.249logI-0.232

FIG. 11 and the above expressions show that the brightness of the window 41 and the distinctive brightness difference D have a uniformly increasing relationship in the area of D>0. FIG. 11 also shows that the distinctive brightness difference which enables the viewer to recognize the border changes as the tone of the window 41 changes. In addition, as the tone (brightness) of the window 41 increases, the distinctive brightness difference increases; i.e., the border becomes more difficult to be visually recognized. The second embodiment is effective in particular when the environmental illuminance is low, for example, in the range from approximately 10 lx to 50 lx.

In the present embodiment, the image area other than black is constituted by a quadrilateral window 41 to simplify the experiment. However, the total area of the image as information displayed by the head-up display device 10 can be actually replaced with the window 41. Namely, the shape of the window 41 is not limited to a quadrilateral, and may be any shape. The area of the window 41 may have any size; however, as the area of the window 41 is increased, the distinctive brightness difference can be increased.

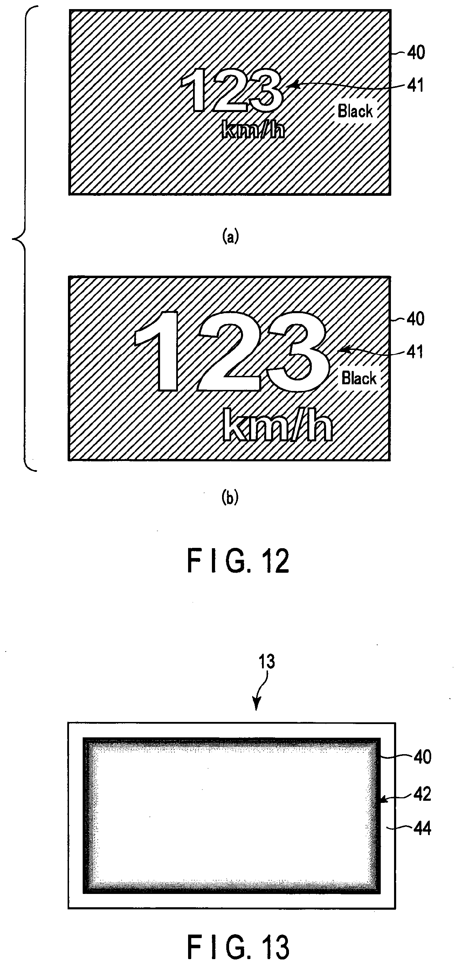

FIG. 12 is a diagram showing examples of information 41 displayed by the head-up display device 10. The head-up display device 10 displays driving information 41 on the display member 15. The total area of the driving information 41 corresponds to the aforementioned window area. The area other than the driving information 41 in the display area 40 displays black. FIG. 12(a) shows an example of the case where the area of driving information 41 is small, and FIG. 12(b) shows an example of the case where the area of driving information 41 is large. The total area of driving information 41 is a value equal to or greater than a specific value so that the border caused by the difference between the black brightness of the display area 40 and the black brightness of the background around the display area 40 is not visually recognized. In addition, driving information 41 has a suitable tone like the window of FIG. 10.

The control circuit 20 makes the brightness and/or area of the window 41 equal to or greater than a specific value by using the environmental illuminance measured by the illuminance sensor 18 so that the border caused by the difference between the black brightness of the display area 40 and the black brightness of the background around the display area 40 is not visually recognized. Namely, the control circuit 20 controls the brightness and/or area of the window 41 so that the distinctive brightness difference takes a numerical value equal to or less than the value indicated in the graph of FIG. 11. Specifically, as shown in FIG. 11, the threshold of the brightness difference which prevents the border from being visually recognized uniformly increases as the common logarithm of the environmental illuminance increases. Accordingly, the control circuit 20 controls the brightness and/or area of the window 41 to make the distinctive brightness difference equal to or less than the threshold of FIG. 11. In addition, the control circuit 20 controls the black brightness of the display area 40 to make the distinctive brightness difference equal to or less than the threshold of FIG. 11.

Therefore, the second embodiment can lower the perceivable resolution by the brightness and/or area of the window 41 other than black. In this way, a head-up display device 10 capable of preventing the border caused by the difference between the black brightness of the display area and the black brightness of the background from being visually recognized can be realized.

[Third Embodiment]

In the third embodiment, a gradation area in which white changes to black towards the outside is provided at an outer edge of the display area of the head-up display device 10. The visual effect of this gradation area makes the border between the black brightness of the display area and the black brightness of the background difficult to be visually recognized.

FIG. 13 is a plane view of the screen of the liquid crystal display device 13 according to the third embodiment of the present invention. The liquid crystal display device 13 comprises a display area 40 which displays an image, and a rectangular frame 44 surrounding the circumference of the display area 40. The frame 44 is an area that does not display an image, and is provided with a peripheral circuit that controls the liquid crystal. The frame 44 is covered with, for example, a black matrix BM, and visually recognized as black.

A gradation area 42 in a frame shape is provided at an outer edge of the display area 40 of the liquid crystal display device 13. In the gradation area 42, white changes to black towards the outside of the screen.

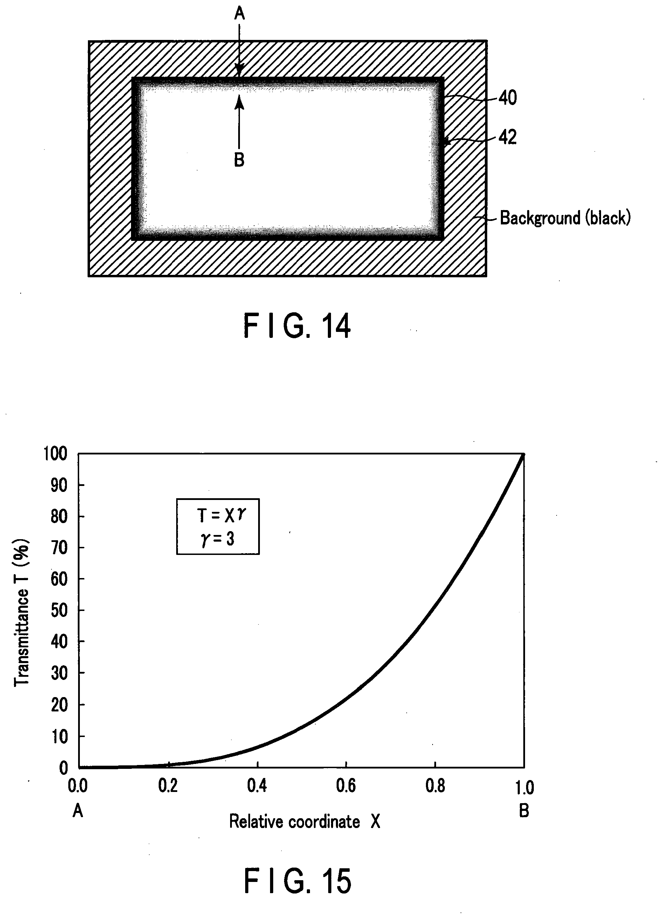

FIG. 14 is a plane view of the display area 40 of the head-up display device 10 and the background visually recognized on the display member 15. In the head-up display device 10, the display member 15 displays the display area 40, and the gradation area 42 in a frame shape is provided at the outer edge of the display area 40. In the gradation area 42, white changes to black towards the outside. Specifically, the gradation area 42 of FIG. 14 is realized by a gradation area provided on the screen of the liquid crystal display device 13 being displayed on the display member 15.

The width of the gradation area 42 on the screen of the liquid crystal display device 13 is approximately 2.5 mm. FIG. 15 is a graph showing the transmittance of the gradation area 42. The vertical axis of FIG. 15 indicates the transmittance T(%), and the horizontal axis of FIG. 15 indicates the relative coordinate X. Symbols A and B in FIG. 15 correspond to the positions of symbols A and B in FIG. 14. Accordingly, the distance between symbols A and B is approximately 2.5 mm.

For example, the gamma value $\gamma$ of the gradation area 42 is 3. The gamma value of the gradation area 42 may be any value.

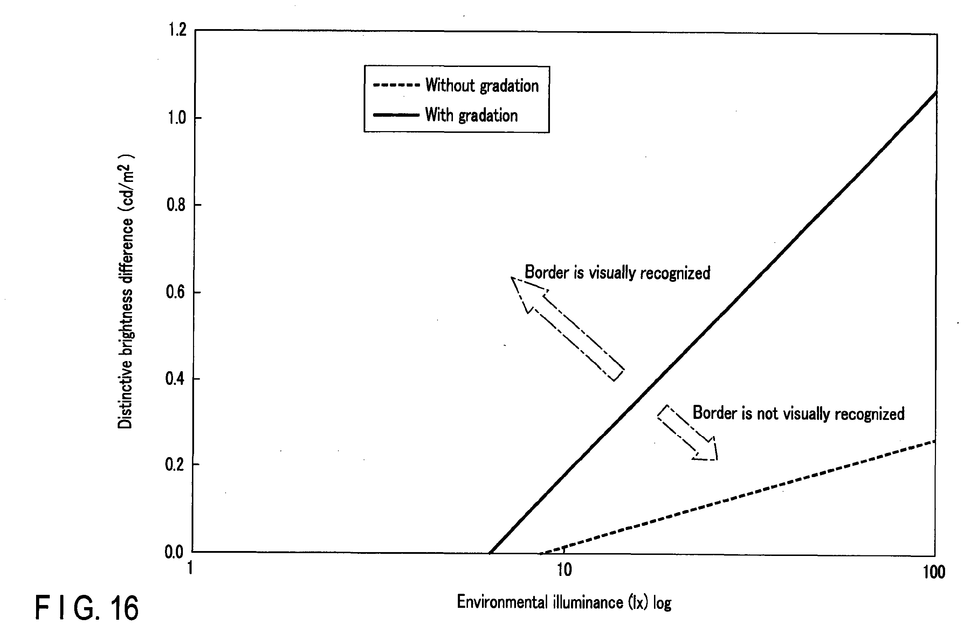

FIG. 16 is a graph showing a distinctive brightness difference at the border between the black brightness of the display area 40 and the black brightness of the background according to the third embodiment. The horizontal axis of FIG. 16 indicates the common logarithm of environmental illuminance (lx), and the vertical axis of FIG. 16 indicates the backlight brightness (cd/m$^2$). In FIG. 16, the tone of the display area 40 other than the gradation area 42 is 100% (white).

As shown in FIG. 16, the distinctive brightness difference at the border of the black brightness of the display area 40 and the black brightness of the background can be increased by providing the gradation area 42 at the outer edge of the display area 40. The approximate expression of the environmental illuminance I and the distinctive brightness difference D of each of the case where the gradation is provided and the case where the gradation is not provided in the environmental illuminance range from approximately 10 lx to 50 lx is as follows:

With gradation: D=0.2491logI-0.232
Without gradation: D=0.888logI-0.706

FIG. 16 and the above expressions show that the distinctive brightness difference D is larger in the area of D>0 when the gradation is provided than when the gradation is not provided. Accordingly, by providing the gradation area 42 at the outer edge of the display area 40, the distinctive brightness difference can be increased; i.e., the border can be made difficult to be visually recognized. The border can be made difficult to be visually recognized by the third embodiment only; however, application of the third embodiment to another embodiment can make the border more difficult to be visually recognized.

There are various methods for providing the gradation:

(1) disposing or attaching a film provided with a gradation on an outer edge of the display region 40 of the screen;
(2) making a gradation by adjusting the sizes of the openings of a light-shielding wire metal in a TFT process for forming a transistor and wiring on the TFT substrate; and (3) making a gradation by adjusting the sizes of the openings of the black matrix in a CF process for forming a color filter and a black matrix.

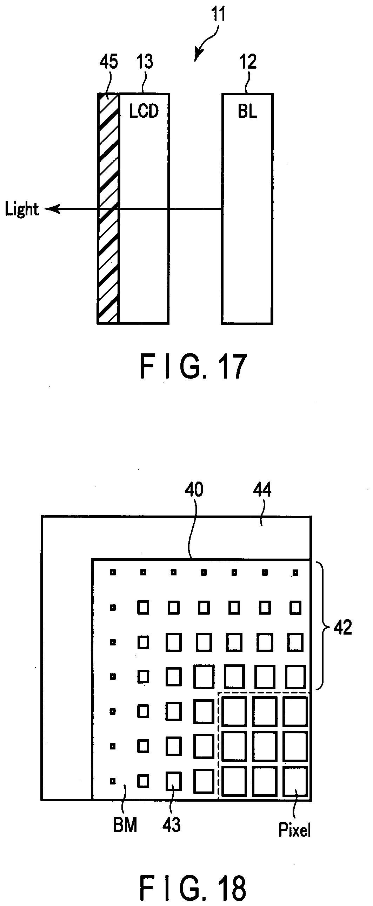

FIG. 17 is a diagram illustrating a method for forming the gradation area 42 by using a film 45. By attaching a film 45 having a gradation area 42 on the screen of the liquid crystal display device (LCD) 13, the gradation area 42 shown in FIG. 13 can be realized.

FIG. 18 is a diagram illustrating a method for forming the gradation area 42 by using a black matrix BM. In the gradation area 42, the black matrix BM comprises a plurality of opening portions 43, the area of which decreases towards the outside of the display area 40. Accordingly, by adjusting the areas of the opening portions 43 of the black matrix BM, a gradation can be formed at the outer edge of the display area 40.

[Fourth Embodiment]

In the fourth embodiment, a frame including one or more colors other than black, which relates to or does not relate to information to be displayed, is displayed at an outer edge of the display area of the head-up display device 10. The visual effect of this frame increases the distinctive threshold of the border between the black brightness of the display area and the black brightness of the background to prevent the difference between the black brightness of the display area and the black brightness of the background from being visually recognized.

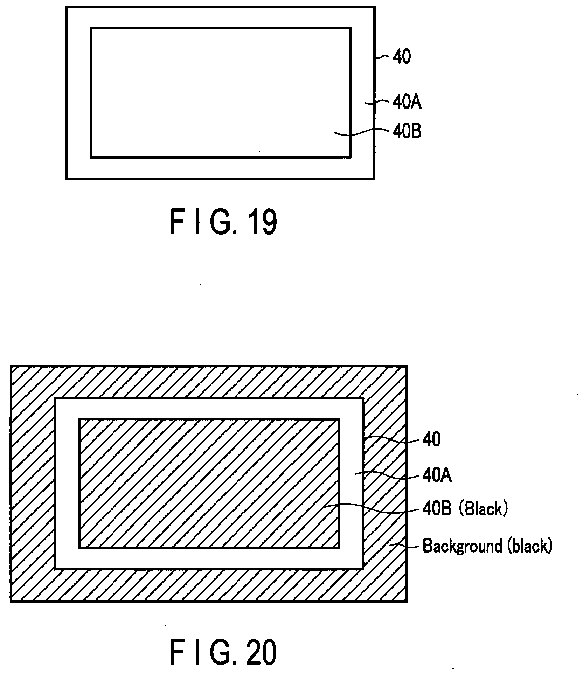

FIG. 19 is a plane view of the display area 40 of the head-up display device 10 according to the fourth embodiment of the present invention. FIG. 20 is a plane view of the display area 40 of the head-up display device 10 and the background visually recognized on the display member 15.

A frame 40A of a color other than black is displayed at the outer edge of the display area 40 by the control circuit 20. The frame 40A need not be of a single color as long as it includes one or more colors other than black, and may be a figure including black, such as a dotted-line shape. The shape and color of the frame 40A may always be the same during display, and may be changed in accordance with what to be displayed in the frame 40A, the environmental illuminance, and other factors.

The vertical width of the frame 40A is set at any dot number between one dot and a quarter of the total vertical dot number of the display area 40. The lateral width of the frame 40A is set at any dot number not less than one dot and not greater than a quarter of the total lateral dot number of the display area 40. The width of the dots of the display area means the width of the lines of the display area.

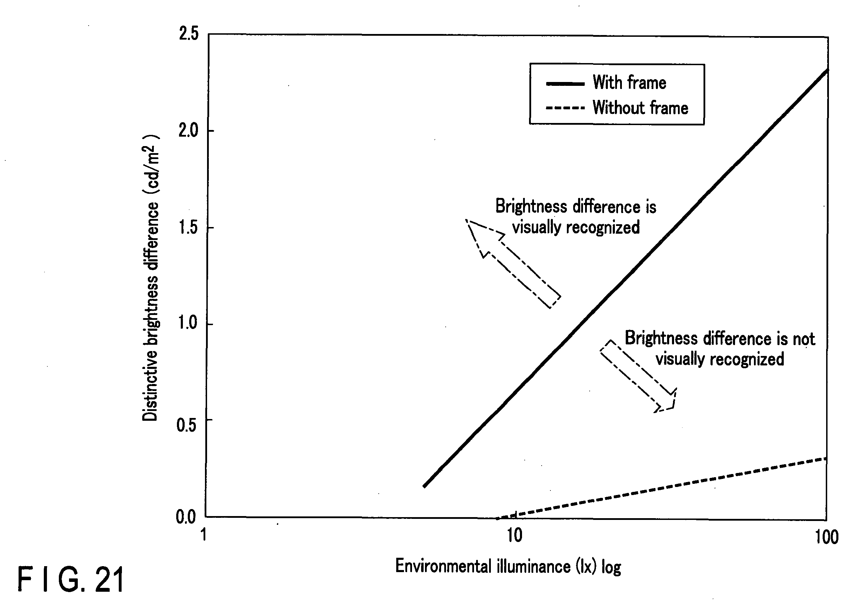

FIG. 21 is a graph showing the distinctive brightness difference between the black brightness of the display area 40 and the black brightness of the background according to the fourth embodiment. The horizontal axis of FIG. 21 indicates the common logarithm of environmental illuminance (lx), and the vertical axis of FIG. 21 indicates the distinctive brightness difference (cd/m$^2$). FIG. 21 shows the case where the frame is provided and the case where the frame is not provided.

In FIG. 21, a head-up display device 10 is used in which the vertical dot number of the display area 40 is 240, and the lateral dot number thereof is 480. With the environmental illuminance in the range from approximately 10 lx to 50 lx, white with a 2-dot width is displayed as the frame 40A, and black is displayed in the area 40B other than the frame 40A. Then, the distinctive brightness difference between the black brightness of the background and the black brightness of the area 40B other than the frame 40A in the display area 40 is examined. As a comparative example, the distinctive brightness difference between the black brightness of the display area 40 and the black brightness of the background in the case where black is displayed on the entire display are 40 is examined by using the same subject. The approximate expression of the environmental illuminance I and the distinctive brightness difference D of each of the case where the frame is provided and the case where the frame is not provided in the environmental illuminance range from approximately 10 lx to 50 lx is as follows:

With the frame: D=0.300logI-0.285
Without the frame: D=1.66logI-1.00

The control circuit 20 makes the frame 40A of a color other than black displayed at an outer edge of the display area 40 to prevent the difference between the black brightness of the display area 40 (area 40B) displayed on the display member 15 by the liquid crystal display device 13 and the black brightness of the background around the display area 40 from being visually recognized. The control circuit 20 also uses the environmental illuminance measured by the illuminance sensor 18 to control the black brightness of the area 40B so that the difference between the black brightness of the area 40B and the black brightness of the background is not visually recognized. Specifically, as shown in FIG.21, the threshold (distinctive brightness difference) for preventing the difference between the black brightness of the area 40B and the black brightness of the background uniformly increases as the common logarithm of environmental illuminance increases. Therefore, the control circuit 20 uses the environmental illuminance measured by the illuminance sensor 18 to control the black brightness of the area 40B to make the difference between the black brightness of the area 40B and the black brightness of the background equal to or less than the plot (D=0.300logI-0.285) shown in FIG. 21. Moreover, the control circuit 20 controls the brightness and width of the frame 40A so that the difference between the black brightness of the area 40B and the black brightness of the background is not visually recognized.

In this way, by displaying the frame 40A including a color other than black on the display area 40, the distinctive brightness difference between the black brightness of the background and the black brightness of the area 40B other than the frame 40A in the display area 40 can be increased; i.e., the brightness difference between the black of the background and the black of the display area can be made difficult to be recognized. In addition, the distinctive brightness difference can be increased as the brightness of the frame 40A is increased, and the distinctive brightness difference can be increased as the width of the frame 40A is increased.

The present invention is not limited to the above-mentioned embodiments, and can be reduced to practice by modifying the constituent elements without departing from the scope of the invention.

REFERENCE SIGNS LIST

10: Head-up display device, 11: Display unit, 12: Backlight, 13: Liquid crystal display device, 14: Reflective member, 15: Display member, 16: Viewer, 17: Virtual image, 18: Illuminance sensor, 19: Storage circuit, 20: Control circuit, 21, 22: Substrate, 23: Liquid crystal layer, 24: Switching transistor, 25: Insulating layer, 26: Pixel electrode, 27: Contact plug, 28: Color filter, 29: Common electrode, 30,31: Circular polarizer, 40: Display area, 41: Window, 42: Gradation area

**Claims**

1. A head-up display device (10), comprising:

a light source (12);
a liquid crystal display device (13) that controls a transmittance of light from the light source (12) and displays an image on a display member (15);

an illuminance sensor (18) that measures an environmental illuminance; and
a control circuit that uses a measurement result of the illuminance sensor (18) to control a brightness of the light source (12), wherein
the control circuit (20) controls the brightness of the light source (12) to prevent a border caused by a difference between a black brightness of a display area displayed on the display member (15) by the liquid crystal display device (13) and a black brightness of a background around the display area from being visually recognized, and
the control circuit (20) controls the brightness of the light source (12) to match the black brightness of the display area with the black brightness of the background.

2. The head-up display device (10) according to claim 1, wherein the control circuit (20)

determines whether the measurement result is less than a first environmental illuminance for distinguishing dark locations from bright locations, and
controls the brightness of the light source (12) in accordance with the determination result.

3. The head-up display device (10) according to claim 1, wherein the control circuit (20)

changes the brightness of the light source (12) in accordance with the difference between the black brightness of the display area and the black brightness of the background when the measurement result is less than a first environmental illuminance for distinguishing dark locations from bright locations, and
changes the brightness of the light source (12) in accordance with a ratio of the black brightness of the display area to the black brightness of the background when the measurement result is equal to or greater than the first environmental illuminance.

4. The head-up display device (10) according to claim 1, wherein the control circuit (20)

controls the brightness of the light source (12) to make the difference between the black brightness of the display area and the black brightness of the background equal to or less than a function uniformly increasing as the measurement result increases when the measurement result is less than a first environmental illuminance for distinguishing dark locations from bright locations, and
controls the brightness of the light source (12) to make a ratio of the black brightness of the display area to the black brightness of the background equal to or less than a constant value when the measurement result is equal to or greater than the first environmental illuminance.

5. The head-up display device (10) according to claim 1, wherein the difference between the black brightness of the display area and the black brightness of the background is a linear function of a common logarithm of the environmental illuminance.

6. The head-up display device (10) according to claim 1, wherein the liquid crystal display device (13) includes a gradation area provided at an outer edge of the display area, white changing to black towards an outside in the gradation area.

7. A head-up display device (10), comprising:

a light source (12);
a liquid crystal display device (13) that controls a transmittance of light from the light source (12) and displays an image on a display member (15);
an illuminance sensor (18) that measures an environmental illuminance; and
a control circuit (20) that uses a measurement result of the illuminance sensor (18) to control a brightness of the light source (12), wherein
the liquid crystal display device (13) displays black in a first area of a display area displayed on the display member (15), and displays a color other than black in a second area other than the first area,
the control circuit (20) controls a brightness and/or area of the second area to be equal to or greater than a specific value to prevent a border caused by a difference between a black brightness of the first area and a black brightness of a background around the display area from being visually recognized, and
the control circuit (20) controls the brightness of the light source (12) to match the black brightness of the first area with the black brightness of the background.

8. The head-up display device (10) according to claim 7, wherein

   a threshold of a brightness difference for preventing the border from being visually recognized uniformly increases as a common logarithm of the environmental illuminance increases, and
   the control circuit (20) controls the brightness and/or area of the second area to make the brightness difference equal to or less then the threshold.

9. A head-up display device (10), comprising:

   a light source (12);
   a liquid crystal display device (13) that controls a transmittance of light from the light source (12) and displays an image on a display member (15);
   an illuminance sensor (18) that measures an environmental illuminance; and
   a control circuit (20) that uses a measurement result of the illuminance sensor (18) to control a brightness of the light source (12), wherein
   the control circuit (20) displays a frame of a color other than black at an outer edge of the display area to prevent a difference between a black brightness of a display area displayed on the display member (15) by the liquid crystal display device (13) and a black brightness of a background around the display area from being visually recognized, and
   the control circuit (20) controls the brightness of the light source (12) to match the black brightness of the display area with the black brightness of the background.

10. The head-up display device (10) according to claim 9, wherein

   a threshold of a brightness difference for preventing the difference between the black brightness of the display area and the black brightness of the background from being visually recognized uniformly increases as a common logarithm of the environmental illuminance increases, and
   the control circuit (20) controls the black brightness of the display area so that the difference between the black brightness of the display area and the black brightness of the background is equal to or less than the threshold.

11. The head-up display device (10) according to claim 9, wherein the color of the frame is white.


**Patentansprüche**

1. Head-Up-Display-Vorrichtung (10), die Folgendes umfasst:

   eine Lichtquelle (12);
   eine Flüssigkristall-Display-Vorrichtung (13), die eine Lichtdurchlässigkeit von der Lichtquelle (12) steuert und ein Bild auf einem Anzeigeelement (15) anzeigt;
   einen Beleuchtungsstärkesensor (18), der eine Umgebungsbeleuchtungsstärke misst; und
   eine Steuerschaltung, die ein Messergebnis des Beleuchtungsstärkesensors (18) verwendet, um eine Helligkeit der Lichtquelle (12) zu steuern, wobei
   die Steuerschaltung (20) die Helligkeit der Lichtquelle (12) steuert, um zu verhindern, dass ein Rand, der durch einen Unterschied zwischen einer schwarzen Helligkeit eines Anzeigebereichs, der auf dem Anzeigeelement (15) durch die Flüssigkristall-Display-Vorrichtung (13) angezeigt wird und einer schwarzen Helligkeit eines Hintergrunds um den Anzeigebereich herum verursacht wird, visuell erkannt wird, und
   die Steuerschaltung (20) die Helligkeit der Lichtquelle (12) steuert, um die schwarze Helligkeit des Anzeigebereichs an die schwarze Helligkeit des Hintergrunds anzupassen.

2. Head-Up-Display-Vorrichtung (10) gemäß Anspruch 1, wobei die Steuerschaltung (20)

   bestimmt, ob das Messergebnis kleiner als eine erste Umgebungsbeleuchtungsstärke ist, um dunkle Orte von hellen Orten zu unterscheiden, und
   die Helligkeit der Lichtquelle (12) in Übereinstimmung mit dem Bestimmungsergebnis steuert.

3. Head-Up-Display-Vorrichtung (10) nach Anspruch 1, wobei die Steuerschaltung (20)

die Helligkeit der Lichtquelle (12) entsprechend dem Unterschied zwischen der schwarzen Helligkeit des Anzeigebereichs und der schwarzen Helligkeit des Hintergrunds ändert, wenn das Messergebnis kleiner als eine erste Umgebungsbeleuchtungsstärke ist, um dunkle Stellen von hellen Stellen zu unterscheiden, und
die Helligkeit der Lichtquelle (12) entsprechend dem Verhältnis der schwarzen Helligkeit des Anzeigebereichs zur schwarzen Helligkeit des Hintergrunds ändert, wenn das Messergebnis gleich oder größer als die erste Umgebungsbeleuchtungsstärke ist.

4. Head-Up-Display-Vorrichtung (10) nach Anspruch 1, wobei die Steuerschaltung (20)

die Helligkeit der Lichtquelle (12) steuert, um den Unterschied zwischen der schwarzen Helligkeit des Anzeigebereichs und der schwarzen Helligkeit des Hintergrunds gleich oder kleiner als eine Funktion zu machen, die gleichmäßig zunimmt, wenn das Messergebnis zunimmt, wenn das Messergebnis kleiner als eine erste Umgebungsbeleuchtungsstärke ist, um dunkle Orte von hellen Orten zu unterscheiden, und
die Helligkeit der Lichtquelle (12) steuert, um ein Verhältnis der schwarzen Helligkeit des Anzeigebereichs zu der schwarzen Helligkeit des Hintergrunds gleich oder kleiner als einen konstanten Wert zu machen, wenn das Messergebnis gleich oder größer als die erste Umgebungsbeleuchtungsstärke ist.

5. Head-Up-Display-Vorrichtung (10) nach Anspruch 1, wobei der Unterschied zwischen der schwarzen Helligkeit des Anzeigebereichs und der schwarzen Helligkeit des Hintergrunds eine lineare Funktion eines gemeinsamen Logarithmus der Umgebungsbeleuchtungsstärke ist.

6. Head-Up-Display-Vorrichtung (10) nach Anspruch 1, wobei die Flüssigkristall-Display-Vorrichtung (13) einen Abstufungsbereich aufweist, der an einem äußeren Rand des Anzeigebereichs vorgesehen ist, wobei sich Weiß nach außen hin im Abstufungsbereich zu Schwarz ändert.

7. Head-Up-Display-Vorrichtung (10), die Folgendes umfasst:

eine Lichtquelle (12);
eine Flüssigkristall-Display-Vorrichtung (13), die eine Lichtdurchlässigkeit von der Lichtquelle (12) steuert und ein Bild auf einem Anzeigeelement (15) anzeigt;
einen Beleuchtungsstärkesensor (18), der eine Umgebungsbeleuchtungsstärke misst; und
eine Steuerschaltung (20), die ein Messergebnis des Beleuchtungsstärkesensors (18) verwendet, um eine Helligkeit der Lichtquelle (12) zu steuern, wobei
die Flüssigkristall-Display-Vorrichtung (13) in einem ersten Bereich eines Anzeigebereichs, der auf dem Anzeigeelement (15) angezeigt wird, Schwarz anzeigt und in einem zweiten Bereich, der sich von dem ersten Bereich unterscheidet, eine andere Farbe als Schwarz anzeigt,
die Steuerschaltung (20) eine Helligkeit und/oder Fläche der zweiten Fläche so steuert, dass sie gleich oder größer als ein bestimmter Wert ist, um zu verhindern, dass ein Rand, der durch einen Unterschied zwischen einer schwarzen Helligkeit der ersten Fläche und einer schwarzen Helligkeit eines Hintergrunds um die Anzeigefläche herum verursacht wird, visuell erkannt wird, und
die Steuerschaltung (20) die Helligkeit der Lichtquelle (12) steuert, um die schwarze Helligkeit des ersten Bereichs an die schwarze Helligkeit des Hintergrunds anzupassen.

8. Head-Up-Display-Vorrichtung (10) nach Anspruch 7, wobei

ein Schwellenwert eines Helligkeitsunterschieds, der verhindert, dass der Rand visuell erkannt wird, mit dem Anstieg eines gemeinsamen Logarithmus der Umgebungsbeleuchtungsstärke gleichmäßig zunimmt, und
die Steuerschaltung (20) die Helligkeit und/oder die Fläche des zweiten Bereichs so steuert, dass der Helligkeitsunterschied gleich oder kleiner als der Schwellenwert ist.

9. Head-Up-Display-Vorrichtung (10), umfassend:

eine Lichtquelle (12);
eine Flüssigkristall-Display-Vorrichtung (13), die eine Lichtdurchlässigkeit von der Lichtquelle (12) steuert und ein Bild auf einem Anzeigeelement (15) anzeigt;
einen Beleuchtungsstärkesensor (18), der eine Umgebungsbeleuchtungsstärke misst; und
eine Steuerschaltung (20), die ein Messergebnis des Beleuchtungsstärkesensors (18) verwendet, um eine Helligkeit der Lichtquelle (12) zu steuern, wobei

die Steuerschaltung (20) einen Rahmen einer anderen Farbe als Schwarz an einem äußeren Rand des Anzeigebereichs anzeigt, um zu verhindern, dass ein Unterschied zwischen einer schwarzen Helligkeit eines Anzeigebereichs, der auf dem Anzeigeelement (15) durch die Flüssigkristall-Display-Vorrichtung (13) angezeigt wird, und einer schwarzen Helligkeit eines Hintergrunds um den Anzeigebereich herum visuell erkannt wird, und die Steuerschaltung (20) die Helligkeit der Lichtquelle (12) steuert, um die schwarze Helligkeit des Anzeigebereichs an die schwarze Helligkeit des Hintergrunds anzupassen.

**10.** Head-Up-Display-Vorrichtung (10) nach Anspruch 9, wobei

ein Schwellenwert eines Helligkeitsunterschieds, der verhindert, dass der Unterschied zwischen der schwarzen Helligkeit des Anzeigebereichs und der schwarzen Helligkeit des Hintergrunds visuell erkannt wird, mit dem Anstieg eines gemeinsamen Logarithmus der Umgebungsbeleuchtungsstärke gleichmäßig zunimmt, und die Steuerschaltung (20) die schwarze Helligkeit des Anzeigebereichs so steuert, dass der Unterschied zwischen der schwarzen Helligkeit des Anzeigebereichs und der schwarzen Helligkeit des Hintergrunds gleich oder kleiner als der Schwellenwert ist.

**11.** Head-Up-Display-Vorrichtung (10) nach Anspruch 9, wobei die Farbe des Rahmens Weiß ist.

**Revendications**

**1.** Dispositif d'affichage tête haute (10), comprenant :

une source de lumière (12) ;
un dispositif d'affichage à cristaux liquides (13) qui commande un facteur de transmission de lumière en provenance de la source de lumière (12) et affiche une image sur un élément d'affichage (15) ;
un capteur d'éclairement (18) qui mesure un éclairement environnemental ; et
un circuit de commande qui utilise un résultat de mesure du capteur d'éclairement (18) pour commander une luminosité de la source de lumière (12), où
le circuit de commande (20) commande la luminosité de la source de lumière (12) pour empêcher une bordure causée par une différence entre une luminosité noire d'une zone d'affichage affichée sur l'élément d'affichage (15) par le dispositif d'affichage à cristaux liquides (13) et une luminosité noire d'un arrière-plan autour de la zone d'affichage d'être visuellement reconnue, et
le circuit de commande (20) commande la luminosité de la source de lumière (12) pour faire correspondre la luminosité noire de la zone d'affichage avec la luminosité noire de l'arrière-plan.

**2.** Dispositif d'affichage tête haute (10) selon la revendication 1, où le circuit de commande (20)

détermine si le résultat de mesure est inférieur à un premier éclairement environnemental pour distinguer des emplacements sombres des emplacements lumineux, et
commander la luminosité de la source de lumière (12) selon le résultat de la détermination.

**3.** Dispositif d'affichage tête haute (10) selon la revendication 1, où le circuit de commande (20)

change la luminosité de la source de lumière (12) selon la différence entre la luminosité noire de la zone d'affichage et la luminosité noire de l'arrière-plan lorsque le résultat de mesure est inférieur à un premier éclairement environnemental pour distinguer les emplacements sombres des emplacements lumineux, et
change la luminosité de la source de lumière (12) selon un rapport de la luminosité noire de la zone d'affichage à la luminosité noire de l'arrière-plan lorsque le résultat de mesure est égal ou supérieur au premier éclairement environnemental.

**4.** Dispositif d'affichage tête haute (10) selon la revendication 1, où le circuit de commande (20)

commande la luminosité de la source de lumière (12) pour faire la différence entre la luminosité noire de la zone d'affichage et la luminosité noire de l'arrière-plan égale ou inférieure à une fonction augmentant de manière uniforme à mesure que le résultat de mesure augmente lorsque le résultat de mesure est inférieur à un premier éclairement environnemental pour distinguer les emplacements sombres des emplacements lumineux, et
commande la luminosité de la source de lumière (12) pour rendre un rapport de la luminosité noire de la zone d'affichage à la luminosité noire de l'arrière-plan égal ou inférieur à une valeur constante lorsque le résultat de mesure est égal ou supérieur au premier éclairement environnemental.

5. Dispositif d'affichage tête haute (10) selon la revendication 1, où la différence entre la luminosité noire de la zone d'affichage et la luminosité noire de l'arrière-plan est une fonction linéaire d'un logarithme commun de l'éclairement environnemental.

6. Dispositif d'affichage tête haute (10) selon la revendication 1, où le dispositif d'affichage à cristaux liquides (13) comprend une zone de gradation pourvue à un bord extérieur de la zone d'affichage, changeant du blanc au noir vers l'extérieur dans la zone de gradation.

7. Dispositif d'affichage tête haute (10), comprenant :

   une source de lumière (12) ;
   un dispositif d'affichage à cristaux liquides (13) qui commande un facteur de transmission de lumière en provenance de la source de lumière (12) et affiche une image sur un élément d'affichage (15) ;
   un capteur d'éclairement (18) qui mesure un éclairement environnemental ; et
   un circuit de commande (20) qui utilise un résultat de mesure du capteur d'éclairement (18) pour commander une luminosité de la source de lumière (12), où
   le dispositif d'affichage à cristaux liquides (13) affiche du noir dans une première zone d'une zone d'affichage affichée sur l'élément d'affichage (15), et affiche une couleur autre que le noir dans une deuxième zone autre que la première zone,
   le circuit de commande (20) commande une luminosité et/ou une zone de la deuxième zone pour qu'elle soit égale ou supérieure à une valeur spécifique pour empêcher une bordure causée par une différence entre une luminosité noire de la première zone et une luminosité noire d'un arrière-plan autour de la zone d'affichage d'être visuellement reconnue, et
   le circuit de commande (20) commande la luminosité de la source de lumière (12) pour faire correspondre la luminosité noire de la première zone avec la luminosité noire de l'arrière-plan.

8. Dispositif d'affichage tête haute (10) selon la revendication 7, où

   un seuil d'une différence de luminosité pour empêcher la bordure d'être visuellement reconnue augmente de manière uniforme à mesure qu'un logarithme commun de l'éclairement environnemental augmente, et
   le circuit de commande (20) commande la luminosité et/ou une zone de la deuxième zone pour rendre la différence de luminosité égale ou inférieure au seuil.

9. Dispositif d'affichage tête haute (10), comprenant :

   une source de lumière (12) ;
   un dispositif d'affichage à cristaux liquides (13) qui commande un facteur de transmission de lumière en provenance de la source de lumière (12) et affiche une image sur un élément d'affichage (15) ;
   un capteur d'éclairement (18) qui mesure un éclairement environnemental ; et
   un circuit de commande (20) qui utilise un résultat de mesure du capteur d'éclairement (18) pour commander une luminosité de la source de lumière (12), où
   le circuit de commande (20) affiche un cadre d'une couleur autre que noir à un bord extérieur de la zone d'affichage pour empêcher une différence entre une luminosité noire d'une zone d'affichage affichée sur l'élément d'affichage (15) par le dispositif d'affichage à cristaux liquides (13) et une luminosité noire d'un arrière-plan autour de la zone d'affichage d'être visuellement reconnue, et
   le circuit de commande (20) commande la luminosité de la source de lumière (12) pour faire correspondre la luminosité noire de la zone d'affichage avec la luminosité noire de l'arrière-plan.

10. Dispositif d'affichage tête haute (10) selon la revendication 9, où

   un seuil d'une différence de luminosité pour empêcher la différence entre la luminosité noire de la zone d'affichage et la luminosité noire de l'arrière-plan d'être visuellement reconnue augmente de manière uniforme à mesure qu'un logarithme commun de l'éclairement environnemental augmente, et
   le circuit de commande (20) commande la luminosité noire de la zone d'affichage de sorte que la différence entre la luminosité noire de la zone d'affichage et la luminosité noire de l'arrière-plan soit égale ou inférieure au seuil.

**11.** Dispositif d'affichage tête haute (10) selon la revendication 9, où la couleur du cadre est le blanc.

Display member

Black brightness of
display area

Display area

Black brightness of
background

Background

Visually-recognized border

# FIG. 1

Brightness (cd/m²)

Environmental illuminance (lx)

- ◆ - Display area
- □ - Background

# FIG. 2

FIG. 3

F I G. 4

F I G. 5

F I G. 6

10

11

**Display unit**

| Control circuit | ~20 |

| Storage circuit | ~19 |

18

Illuminance sensor

| Liquid crystal display device | ~13 |

| Backlight | ~12 |

# FIG. 7

28

28-R          28-G          28-B          BM

R          G          B

FIG. 8

EP 3 404 466 B1

| Environmental illuminance $I$ (lx) | $C_1 \cdot \log I + C_2$ | $C_3 \cdot I$ | Backlight brightness upper limit ($cd/m^2$) |
|---|---|---|---|
| 10 | 5600 | 2700 | 5600 |
| 30 | 18959 | 8100 | 18959 |
| 100 | 33600 | 27000 | 33600 |
| 300 | 46959 | 81000 | 81000 |
| 1000 | 61600 | 270000 | 270000 |
| 3000 | 74959 | 810000 | 810000 |
| 10000 | 89600 | 2700000 | 2700000 |

# FIG. 9

(a)

White ( 100% )　Black

40
41

(b)

Gray ( 54% )　Black

40
41

(c)

Gray ( 20% )　Black

40
41

(d)

Black ( 0% )　Black

40
41

# F I G. 10

F I G. 11

(a)

(b)

F I G. 12

F I G. 13

F I G. 14

$$T = X^{\gamma}$$
$$\gamma = 3$$

F I G. 15

FIG. 16

11

45  13          12

LCD          BL

Light ←

F I G. 17

40        44

42

BM  43        Pixel

F I G. 18

F I G. 19

F I G. 20

F I G. 21

EP 3 404 466 B1

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP H10221691 A
- DE 102008048778 A1